# EUROPEAN PATENT APPLICATION

(11) **EP 1 524 592 A2**
(43) Date of publication of application: **20.04.2005**
(21) Application number: 04251526.2
(22) Date of filing: 17.03.2004
(51) Int. Cl.: G06F 3/033

(54) **Multi-function user input device adaptable for use by both left and right handed users**

(30) Priority: 17.10.2003 US 512377 P
(71) Applicant: VTech Electronics Limited, Tai Po New Territories (HK)
(72) Inventor: Donny, Leung Chi Kit, Yuen Long, Hong Kong (CN); Tat, Lee Wan, North Point, Hong Kong (CN)
(74) Representative: Lloyd, Patrick Alexander Desmond

(57) **Abstract**

A multifunction user input device for use with an electronic video apparatus, such as a video game console, educational console or computer suitable for use by both left and right handed users. The multifunction user device further includes a housing, a first input device substantially mounted upon the housing base and a second input device rotationally mounted substantially upon the housing. A rotation mechanism is affixed between the second input device and the housing permitting the second input device to rotate about its center axis to, in turn, permit the first input device to be located alternatively to the left side or the right side of the second input device, as desired.

## Description

### BACKGROUND OF THE INVENTION

### 1. Field of the Invention

The present invention relates generally to user input devices intended for use with electronic devices such as educational and/or entertainment audio/video consoles or PC's, and specifically to a user input device which includes both a joystick module and a keypad module in a single overall housing where the joystick may be rotated into a position to either the left side or right side of the keypad such that the input device is easily adaptable for use by both left handed and right handed users.

### 2. The Prior Art

The increasing sophistication of microprocessor based electronic devices such as personal computers (PC's) and video entertainment and game consoles, together with increasingly sophisticated software used with such devices, has created a demand for many different types of user input devices to control or otherwise interact with the software. Software such as a flight simulator program may optimally require use of both a joystick input device as well as conventional keypad input device containing a plurality of buttons. Educational and entertainment software designed for children is increasingly optimized for use in connection with both joystick and keypad input devices. For example, a joystick device is ideal for use by a young child to control/manipulate a cursor on a video display screen where calibrations can be made for varying the degrees of a child's manual dexterity. It is also desirable to offer a child the use of a keypad input device having alphanumeric labeled keys or different colored buttons to further interact with or provide responses or commands to the software. Moreover, it many cases it is desirable to provide for multiple types of user input devices for simultaneous use during an entertainment or educational game session.

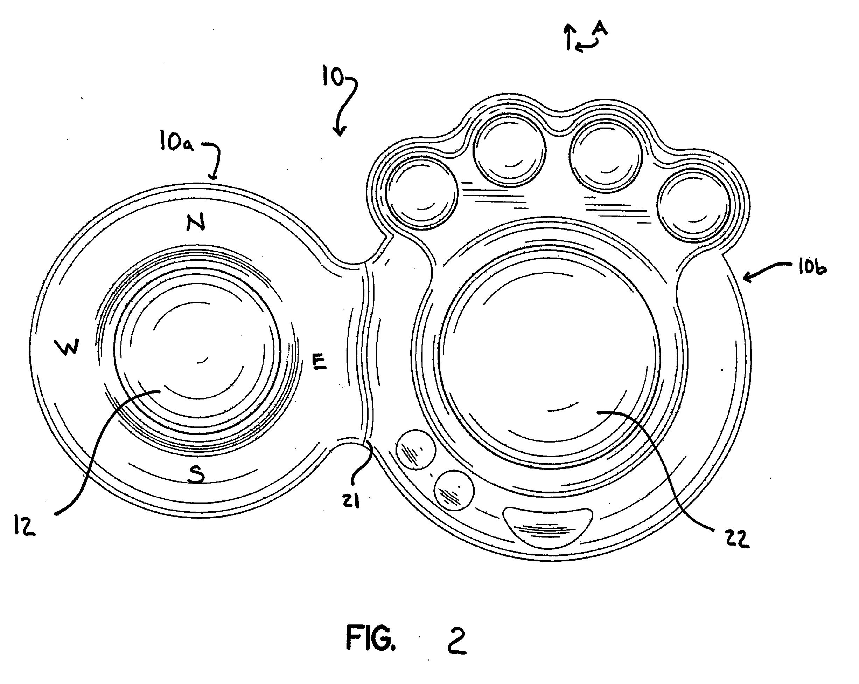

One prior art solution addressing the need for multiple user input devices was to merely provide separate stand-alone devices each independently connected to one or more input ports present on a console or PC. One disadvantage of such a prior art arrangement is the fact that by design the input devices are not affixed to one another and accordingly they may be difficult to position in an optimal manner or otherwise maintain in a desired position relative to one another. Moreover, during the course of game play rapid or exaggerated motions may cause one or the other of the input devices to tip over, separate, or otherwise interfere with the desired operation of the input devices and, in turn, the entertainment or educational value provided by the software.
Various forms of combined user input devices exist in the prior art which include both a joystick as well as a keypad component. Such devices are typically contained within a single unitary housing which by design places the upright joystick controller to one side or the other of the keypad in a fixed arrangement. One example is illustrated in U.S. Pat. No. 6,429,849, Fig. 2. As such, the device is typically best suited for use by a right handed individual as opposed to a left handed individual, based upon the position of the joystick relative to the keypad. Such products do not provide for moving the joystick or otherwise altering the orientation of the two input devices with respect to one another. Accordingly, particularly in the context of young children, such inflexibility may frustrate the use of the input device and/or the benefits to be gained from the entertainment and/or educational features provided by the electronic console with which the input device is used.

One additional form of prior art is disclosed in U.S. Pat. No. 5,786,807 and U.S. Pat. No. 5,781,180 each of which disclose a convertible peripheral input device comprising a multi-axis input device such as a joystick used in combination with a control pad including a plurality of buttons. This particular prior art device in fact, comprises two separate stand-alone input units each with their own housings and independent wired connection to an external device. Each unit's housings are joined together by a hinge plate spanning and affixed to the bottom of each of the device housings using screws. While the overall device is convertible from right handed to left handed use, making such a conversion requires complete disassembly of the hinge plate, starting with removal of the screws, manipulation of the hinge plate and total reassembly and reinsertion of the screw fasteners. One obvious potential disadvantage is the potential for one or more of the screws or even the hinge plate to become lost or damaged, thereby defeating the intended utility of the device. Furthermore, such a prior art construction is not ideal for young children who will likely require the assistance of an adult to reconfigure the device from a right to a left handed mode, and the reverse.

Therefore, it is an object of the present invention to provide a multi-function user input device suitable for use by both left and right handed users for use in association with an electronic console where the user input device includes a plurality of input devices which may be readily repositioned with respect to one another, and yet remain connected and retained within a unitary integrated structure.

It is another object of the present invention to provide a rotating mechanism which serves to permit one of the input devices to rotate with respect to the other of the input device, thereby causing one of the input devices to be repositioned from one side to the other.

It is still a further object of the present invention to include a sensor which serves to detect the relative position of one of the input devices with respect to the other to thereby signal to the associated electronic console the particular orientation of the input devices as configured by the user.

It is a further object of the present invention to provide a plurality of user input devices retained within a single integrated housing assembly thereby precluding damage to or loss of any components or parts thereof.

It is yet another object of the present invention to provide an easy-to-use input device suitable for use by a child who can reconfigure the input device for left handed or right handed operation without parental or adult assistance.

These and other objects of the present invention will become apparent from the specifications, drawings and claims.

### SUMMARY OF THE INVENTION

The invention disclosed herein comprises an multi-function user input device for use with an electronic video apparatus, such as a video game console, educational console or personal computer suitable for use by both left and right handed users. The multi-function user input device further includes a housing base, a first input device substantially mounted upon the housing base and a second input device rotatable mounted substantially upon the housing base. A rotation mechanism is provided and affixed between the second input device and the housing permitting the second input device to rotate about its center axis to, in turn, permit the first input device to be located alternatively to the left side or the right side of the second input device, as desired. Accordingly, the present device may be readily adapted for use by both left handed and right handed users.

In the preferred embodiment of the present invention, the first input device comprises a multi-axis joystick which includes a substantially upright extending member which is moveable in at least the two axis 90 degrees apart, and preferably, in all other directions. The preferred embodiment of the present invention further includes a second input device which comprises a keypad including one or more user actuated input surfaces. In other embodiments of the present invention, the first input device may comprise a trackball or a keypad likewise including one or more user actuated surfaces.

A rotation mechanism is provided affixed to both the housing base and the second input device. The rotation mechanism comprises a moveable planar member such as a circular disk movably retained within a frame where the circular disk is affixed to the second input device and where the frame is affixed to the housing base such that the second input device is retained upon and can be rotatably positioned relative to the housing base. Of course, this orientation can be reversed whereby the circular disk is affixed to the housing base and the frame affixed to the second input device. In the preferred embodiment of the present invention, the frame comprises an upper frame member and a lower frame member joined together and suitable for retaining the circular disk thereinbetween. A position sensor is associated with the second input device which serves to indicate to the electronic video device the particular orientation of the first input device with respect to the second input device. In particular, the position sensor may comprise a switch affixed to the interior portion of the lower frame member, as well as a raised flange positioned on the lower facing surface of the circular disk, whereby the switch is closed when the second input device is rotated to one side of the first input device and is opened when the second input device is rotated to the other side of the first input device.

The invention further includes a releasable locking mechanism associated with the rotation mechanism serving to lock the position of the second input device relative to the housing base when fully rotated to one or more of its normal operating positions. In the preferred embodiment of the present invention the second input device is rotatable and lockable into one of two normal operating positions, positioned 180 degrees apart. In particular, the locking mechanism comprises a bolt positioned on the frame suitable for engaging either of two locking ports positioned 180 degrees apart on the circular disk, and which when engaged prevents the circular disk and frame from rotating with respect to one another and in turn, preventing the second input device from rotating with respect to the housing base when the second input device is in either of its two normal operating positions defined by the position of the respective locking ports. The bolt is preferably spring-biased to a normally extended position such that the bolt may freely engage with any of the provided locking ports when aligned therewith.

The preferred embodiment of the present invention further includes a coil spring associated with the circular disk and the frame. The spring exerts a force opposing the second input device from the disk when the second input device when locked into either of its two normal operating positions. The spring serves to bias the disk and frame so as to initiate rotation of the disk relative to the frame when the bolt is released from a locking port. In the preferred embodiment of the present invention, the coil spring is positioned surrounding the axis of rotation of the circular disk and engages with both projections extending from each of the disk and the frame. The circular disk further includes a collar positioned about its center axis and wherein the lower portion of the frame includes a hole positioned about its center axis providing for telescopic receipt of the collar towards centering the disk within the frame.

The preferred embodiment of the present invention, the second input device includes a bezel forming both the top and sides of the second input device, together with one or more user activated buttons and electronic circuitry for electrically connecting the button to the electronic video console apparatus. In the preferred embodiment, the second input device bezel is substantially round in shape to further facilitate rotation. Accordingly, the first input device includes a housing, a portion of which is concave in shape so as to substantially conform to the convex shape of the round bezel portion of the second input device bezel and which further serves to form an overall unitary housing.

### BRIEF DESCRIPTION OF THE DRAWINGS

Fig. 1 of the drawings illustrates a right elevational perspective view of the present multi-function user input device specifically showing the joystick component oriented to the left side of the keypad component of the input device;

Fig. 2 of the drawings is a top plan view illustrating the joystick component oriented to the left side of the keypad component of the device;

Fig. 3 of the drawings is a top plan view illustrating the joystick component oriented to the right side of the keypad component of the device;

Fig. 4 of the drawings is an exploded view of the present invention specifically illustrating the rotation mechanism which facilitates the rotation of the keypad component towards positioning the joystick component to either the left or right side of the keypad component; and

Fig. 5 of the drawings illustrates a cross-sectional view of the present invention specifically illustrating the structure which serves to lock the keypad component into one of its two normal operating orientations.

### DETAILED DESCRIPTION OF THE DRAWINGS

While the present invention is susceptible of embodiment in various forms, there is shown in the drawings and will hereinafter be described several embodiments of the invention, with the understanding that the present disclosure is to be considered as an exemplification of the invention, and is not intended to limit the invention to the specific embodiments illustrated.

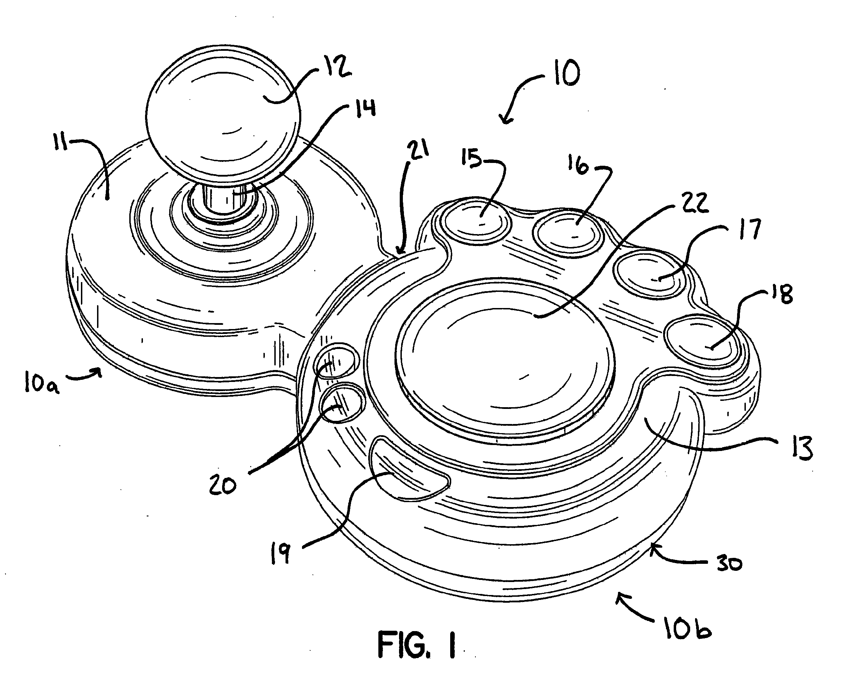

Fig. 1 of the drawings specifically illustrates a perspective view of the present multi-function user input device 10 optimized for use by both left and right handed users. In the embodiment of the invention illustrated, one of the multi-function input devices comprises a joystick component 10a which permits a user to control an associated electronic video apparatus such as a video game console or other form of electronic entertainment or educational device or personal computer (not shown). The joystick component 10a is shown comprising an upper joystick housing 11 through which emanates shaft 14 upon which is shown affixed control ball 12. As is known to one of ordinary skill in the art, a typical multi-axis joystick user input device comprises a substantially upright shaft 14 which may be moved in multiple axis by the user's physical touch. Shaft 14 connects with electro-mechanical circuitry contained beneath housing 11 and within the overall device 10, which circuitry is not shown and details of which do not form a portion of the present invention.

The keypad component 10b is shown comprising an upper keypad housing 13 which contains numerous openings through which protrude various user input buttons or switches which similarly permit a user to control the associated electronic video apparatus or computer. In addition to primary control button 22 input buttons 15-20 positioned around the periphery of housing 13. In the present embodiment of the invention, the keypad component 10b has a substantially "paw-like" appearance where input buttons 15-18 correspond substantially to the position of a user's four fingers. Primary input button 22 is configured to be conveniently actuated by the user pressing their palm upon the button 22 while leaving the fingers situated over buttons 15-18. Buttons 19-20 are preferably configured to provide general control functions such as starting, stopping or pausing the game or other education entertainment activity running on the associated electronic console.

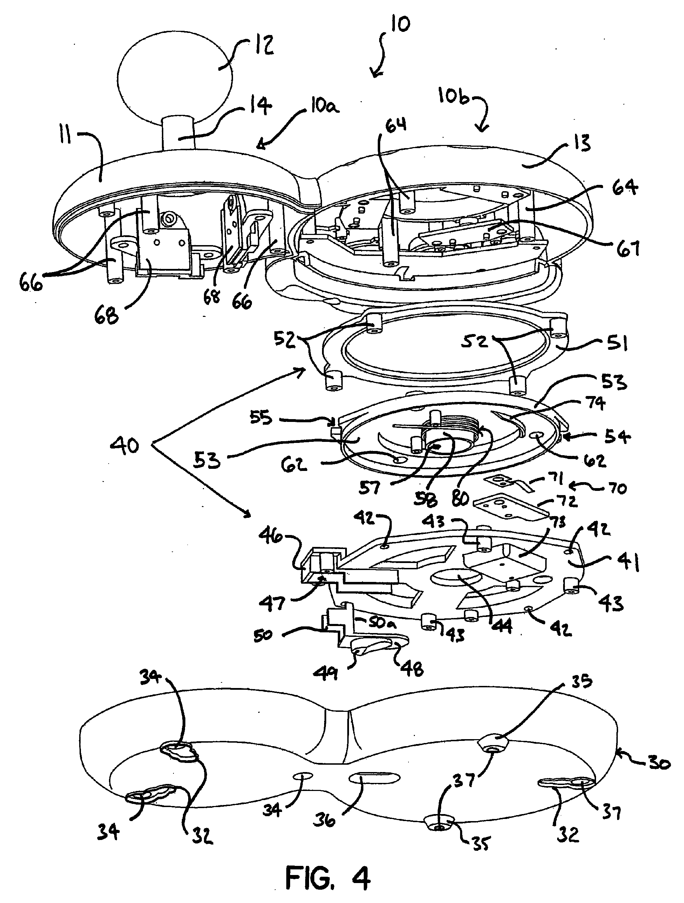

Joystick housing 11 and keypad housing 13 are formed of two separate structures which abut one another at joint 21. Accordingly, as further described herein, the two housings, and accordingly their underlying internal components may be orientated in different positions with respect to one another by rotation of keypad component 10b about its center axis. Lower or base housing 30 spans both joystick housing 11 and keypad housing 12 which are each mounted thereon and serves to enclose the internal electro-mechanical devices of both input devices, as further described in connection with Fig. 4 of the drawings.

The present invention may be connected to its associated electronic video apparatus, video game console, electronic entertainment or educational device or personal computer via a wired or wireless connection, not shown.

Fig. 2 of the drawings illustrates the present invention wherein joystick component 10a is positioned and oriented to the left side of keypad component 10b, as shown in Fig. 1.

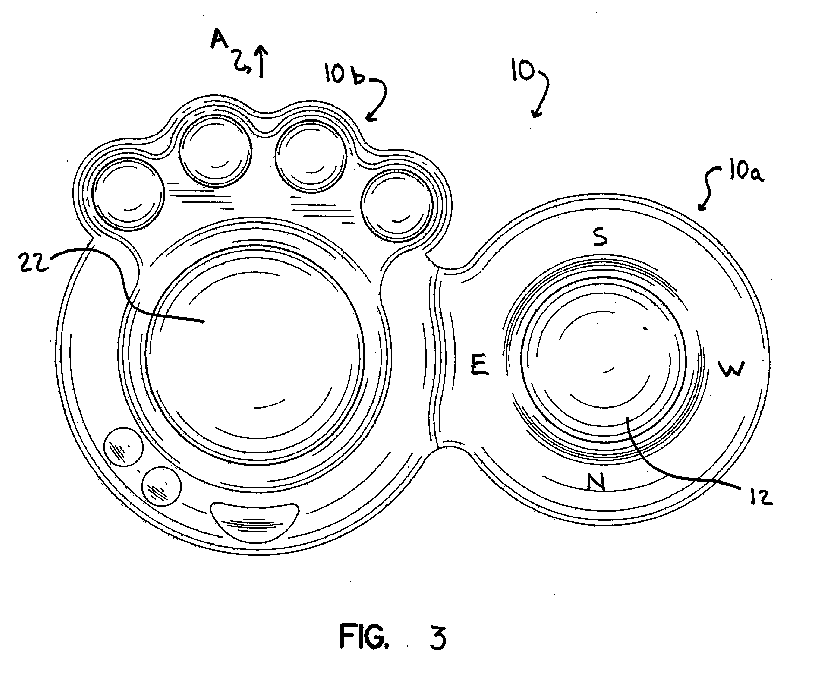

Fig. 3 of the drawings illustrates the present invention wherein keypad component 10b is shown rotated 180 degrees from the position as shown in Fig. 1 whereby joystick component 10a is positioned to the right side of keypad component 10b. Accordingly, by facilitating the movement of keypad component 10b and joystick component 10a, the input device 10 may be readily adapted for use by both left handed and right handed users. The invention further accommodates those users who by preference wish to actuate the joystick 10a with their left hand and the keypad 10b with their right hand, as well as those users who desire the reverse, i.e., actuating the joystick using their right hand the keypad with their left hand.

Fig. 4 illustrates an exploded view of the present multi-function input device 10 specifically showing the two separate joystick and keypad components, 10a and 10b, as well as the rotation mechanism which facilitates the repositioning of the two input components with respect to one another. The integrated user input device 10 is shown comprising lower housing 30 together with joystick housing 11 and keypad housing 13 which when assembled, provide a substantially unitary construction. Joystick component 10a is shown comprising joystick housing 11 through which protrudes shaft 14 upon which is fixed control ball 12. Shaft 14 connects with internal electro-mechanical structure which is not shown for purposes of convenience, which structure would in turn cooperate with electronic sensors 68 which serve to communicate to the external electronic console the relative position of the joystick in both the stationary as well as off-set position caused by movement of control ball 12 by the user. The lower facing surface of housing 30 is shown comprising feet 32 and 35 which serve to stabilize the input device 10 upon a substantially horizontal surface during use such as a table. Feet 32 are configured to accept non-skid inserts such as made of rubber, corresponding to the overall shape and which serve to hide the underlying openings 34 through which screws, not shown, are passed to affix the joystick housing 11 to lower housing 30. Specifically, joystick housing 11 is affixed to lower housing 30 through screws passing through openings 34 which align with locking stems 66 positioned on the underside of joystick housing 11.

Keypad component 10b of the present device is composed of keypad housing 13 together with a rotation mechanism comprising frame 40 and disk 53. Frame 40 is shown comprising an upper frame member 51 and a lower frame member 41. The upper frame member 51 and lower frame member 41 are joined to one another using screws, not shown, which pass through openings 42 in lower frame member 41 and are secured to stems 52 in the upper frame member 51. Disk 53 is accordingly positioned and substantially retained
within frame 40 in a manner which permits disk 53 to rotate. Disk 53 comprises a substantially round disk having locking ports 54 and 55 positioned upon the outer facing periphery of disk 53, 180 degrees apart from one another. In the embodiment illustrated locking ports 54 and 55 are formed so as to extend outward from the peripheral edge of disk 53 and possess beveled surfaces flanking the locking port toward facilitating the locking of the disk 53 into a fixed position. Alternatively, locking ports can be formed as notches or grooves extending inward from the outer peripheral edge of disk 53. Disk 53 further includes a central hub 58 having an opening 57 therein. Upon assembly, hub 58 is aligned with opening 44 of lower frame member 41 to thereby substantially center and position disk 53 within frame 40. Disk 53 further includes openings 62 which accepts screws, not shown, to affix disk 53 to stems 64 emanating downward from the lower facing surface of keypad housing 13. Frame assembly 40 is, in turn, affixed to lower housing 30 by screws, not shown, which pass through openings 37 and engage with stems 43 emanating downward from the lower facing surface of lower frame member 41. One operating principle of the present invention is thus established whereby housing 13 may rotate about its central axis defined by hub 58 by virtue of its connection with rotating disk 53 which is retained in a moveable orientation within frame 40 which frame is, in turn, affixed in a stationary manner to lower housing 30.

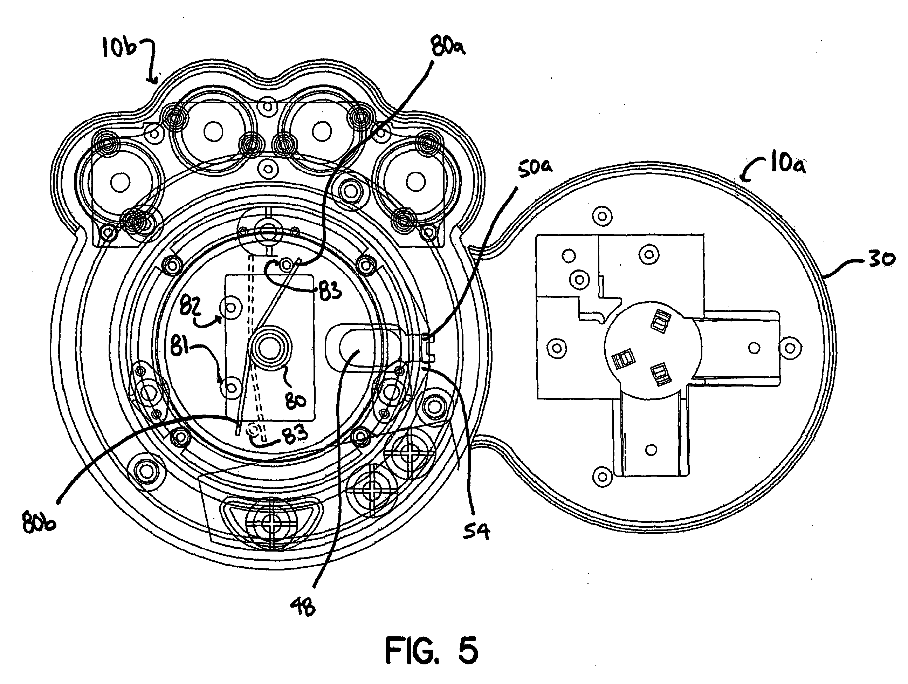

Lower frame member 41 further discloses a locking assembly which in operation serves to retain disk 53 in one of two releasable fixed orientations. The locking assembly is comprised of sliding bolt 48 which is positioned within channel 47 formed into lower frame member 41. In the preferred embodiment of the present invention a spring, not shown, is positioned abutting the interior end facing surface 46 of channel 47 and the outwardly facing surface of channel 50 of sliding bolt 48 thereby biasing bolt 48 inwardly toward the central axis of lower frame member 41. As further shown in Fig. 5, bolt 48 in its normal extended position engages with either of two locking ports 54 and 55, whereby surface 50a engages with the peripheral edge of disk 53 within locking ports 54 and 55, respectively, thereby precluding rotation of disk 53, until locking bolt 48 is released. Actuation of locking bolt 48 is a manual operation facilitated by the user's movement of bolt 48 which in an assembled configuration includes control surface 49 accessible through opening 36 in the bottom on housing 30 thereby accessible to the user.

Rotating disk 53 further includes coil spring 80 which tensions when disk 53 is rotated into either of its locked positions and functions to bias disk 53 to a neutral position from either of its engaged positions when bolt 48 is released, as further described in connection with Fig. 5. A sensor mechanism is further provided to detect and signal in which of the two alternative engaged or locked positions the disk 53 is rotated into with respect to frame 40. In the embodiment illustrated the sensor 70 cooperates with raised flange portion 74 positioned on the downwardly facing surface of disk 53 which may rotate into alignment with sensor 70 positioned on the upwardly facing surface of lower frame member 41, and specifically within well 73. Sensor 70 is shown comprising spring 71 and switch 72. In the embodiment illustrated, raised flange 74 contacts spring 71 which forms a part of and closes switch 72 when disk 53 is rotated into one of its locked positions, specifically where the joystick component 10a is positioned to the left edge of keypad component 10b. Alternatively, when the joystick component 10a is orientated to the right edge of keypad component 10b raised flange 74, rotating with disk 53, no longer aligns with sensor 70 such that switch 72 will remain open. In the preferred embodiment of the present invention, switch 72 is connected via wire to circuitry within the controller and/or an external device to thereby detect and/or signal the specific orientation of the input device 10. While sensor 70 is illustrated as comprising a physical contact switch other sensor devices, such as an optical or magnetic sensor could be used.

As can be appreciated from Fig. 2 and 3, the orientation of the joystick component 10a effectively reverses when keypad component 10b is rotated from one side of joystick component 10a to the other. The letters N, S, E and W denoting North, South, East and West as shown in Figs 2 and 3 illustrate this concept. In short, up (N) becomes down (S) and left (W) becomes right (E) in that the joystick is essentially turned upside down when rotated 180 degrees - when the joystick is to one side of the keypad component 10b verses the other given that the keypad 10b remains in a constant upward facing orientation with respect to the user as designed by arrow "A". Accordingly the sensor serves to detect and correct for this inversion of coordinate positions upon rotation of the keypad component 10b permitting proper interpretation of manipulation of the joystick and triggering correct movement of a cursor or the other control of the electronic device upon actuation of the joystick by the user.

Bias spring 80 serves to initiate the rotation of disk 53, and in turn keypad assembly 13, when locking bolt 48 is retracted from locking port 54 or 55 to thereby facilitate the unlocking, movement and rotation of the device by the user. Referring to Fig. 5, it can be seen that coil spring 80 is positioned surrounding hub 58 of disk 53. The free ends 80a and 80b of spring 80 come in contact with pins 81 and 83 or pins 81 and 83 when the keypad is rotated fully and locked into one or the other of its normal operating positions, respectively. Specifically, pin 83 emanates upwardly from the top facing surface of lower frame member 41. As shown in Fig. 5, when disk 53 is rotated toward either of the two normal locked positions the free ends 80a and 80b of spring 80 engage with one pin on each of disk 53 and frame member 41 and when rotated into a fully locked position said pins serve to tension spring 80 which imparts an opposing force upon and between disk 53 and frame 40 when the disk 53 is in one or the other of its locked positions. Ghost lines indicate the position of free ends 80a and 80b relative to pins 81, 82 and 83 when disk 53 is in partial rotation toward locking port 55, and specifically showing pin 83 moved counter-clockwise so as to abut free end 80b and free end 80a moving toward contact with pin 82. Accordingly, upon release of bolt 48, spring 59 seeks to return to a normal untensioned position and will thus initiate the rotation of disk 53 within frame 40, and in turn, housing keypad 10b by virtue of its affixation to housing 13. In short, releasing locking bolt 48 causes the keypad housing to rotate and move free of either of locking ports 54 and 55, such that when bolt 48 is released, housing 10b remains moveable in that bolt 48 and surface 50a is no longer in alignment with either of the locking ports 54 and 55 such that the user can manually continue the rotation of the keypad 10b into the other of the normal operating positions without the need to continue pressing upon bolt 48 or surface 49.

While the invention as illustrated disclosed the use of two locking ports 55 and 54 positioned 180 degrees apart, it is within the scope of the present invention to provide additional ports positioned therebetween around the periphery of disk 53 to thereby permit the joystick to be orientated and locked into place in still further positions with respect to position of keypad 10b.

The foregoing description and drawings merely explain and illustrate the invention and the invention is not limited thereto, as those skilled in the art who have the disclosure before them will be able to make modifications and variations therein without departing from the scope of the invention.

## Claims

1. A multi-function user input device for use with an electronic video apparatus, the user input device comprising:
- a housing base;
- a first input device mounted substantially upon the housing base;
- a second input device rotatably mounted substantially upon the housing base; and
- a rotation mechanism associated with the second input device and the housing base permitting the second input device to rotate substantially 180 degrees about its center axis, to, in turn, permit the first input device to be located alternatively to the left side or the right side of the second input device thereby facilitating use of the ambidextrous user input device by left and right handed users alike.

2. The invention according to Claim 1 wherein the first input device comprises a multi-axis joystick.

3. The invention according to Claim 1 wherein the first input device comprises a trackball.

4. The invention according to Claim 1 wherein the first input device comprises a keypad including one or more user activated input surfaces.

5. The invention according to Claim 1 wherein the second input device comprises a keypad including one or more user activated input surfaces.

6. The invention according to Claim 1 wherein the rotation mechanism is affixed to the housing base and the second input device.

7. The invention according to Claim 2 wherein the rotation mechanism comprises a circular disk moveably retained within a frame wherein the circular disk is affixed to the second input device and the frame is affixed to the housing base such that the second input device is retained upon and can be rotatably positioned relative to the housing base.

8. The invention according to Claim 7 wherein the frame comprises an upper frame member and a lower frame member jointed together and suitable for retaining the circular disk therein between.

9. The invention according to Claim 1 further including a position sensor associated with the second input device indicating to the electronic video device the orientation of the first input device with respect to the second input device.

10. The invention according to Claim 9 wherein the position sensor comprises a switch affixed to the interior portion of the lower frame member and a raised flange positioned on the lower facing surface of the circular disk whereby the switch is in a first position when the second input device is rotated to one side of the first input device and is in a second position when the second input device is rotated to the other side of the first input device.

11. The invention according to Claim 7 wherein the rotation mechanism further includes a releasable locking mechanism which serves to fix the position of the second input device relative to the housing base when fully rotated to one or more of its normal operating positions.

12. The invention according to Claim 7 wherein the second input device is rotatable and lockable into one of two normal operating positions positioned 180 degrees apart.

13. The invention according to Claim 12 wherein the locking mechanism comprises a bolt positioned on the frame which bolt engages with either of two locking ports positioned 180 degrees apart on the circular disk which when engaged prevents the circular disk and frame to rotate with respect to one another and in turn preventing the second input device from rotating with respect to the housing base when the second input device is in either of its two normal operating positions defined by the position of the locking ports.

14. The invention according to Claim 13 wherein the bolt is spring biased to a normally extended position.

15. The invention according to Claim 7 further including a spring associated with the circular disk and the frame for providing a resistive force upon the second input device when locked into either of its two normal operating positions and which serves to bias the disk and frame to initiate rotation of the disk and frame with respect to one another when the bolt is released from a corresponding locking ports.

16. The invention according to Claim 6 wherein the spring is positioned proximate the axis of rotation of the circular disk and engages with the frame.

17. The invention according to Claim 7 wherein the circular disk includes a collar positioned about the center axis and wherein the lower portion of the circular frame includes a hole positioned about the center axis for telescopic receipt of the collar toward centering the circular disk within the frame.

18. The invention according to Claim 5 wherein the second input device includes a bezel forming the top and sides of the second input device, one or more user activated buttons and electronic circuit for electrically connecting the buttons to the electronic video apparatus.

19. The invention according to Claim 18 wherein the second input device bezel is substantially round in shape.

20. The invention according to Claim 18 where the first input device includes a housing a portion of which is convex in shape so as to substantially abut the second input device bezel and form a unitary housing.

21. A unitary multi-function user input device for use with an electronic apparatus, the user input device comprising:
- a housing;
- a first input device retained substantially within the housing;
- a second input device rotatably retained substantially within the housing; and
- a rotation mechanism associated with the second input device permitting the second input device to rotate with respect to the first input device to, in turn, permit the position of the first input device to be altered with respect to the second input device toward facilitating use of different hand positions.
